# EUROPÄISCHE PATENTANMELDUNG

(11) **EP 3 330 334 A1**
(43) Veröffentlichungstag der Anmeldung: **06.06.2018**
(21) Anmeldenummer: 16201493.0
(22) Anmeldetag: 30.11.2016
(51) Int. Cl.: C09J 5/06, F16B 11/00, F16B 37/04, F16B 41/00

(54) **FÜGEVERFAHREN UND BEFESTIGUNGSELEMENT**

(71) Anmelder: Newfrey LLC, New Britain, CT 06053 (US)
(72) Erfinder: Gramsch-Kempkes, Sascha, 35394 Giessen (DE)
(74) Vertreter: SBD IPAdmin

(57) **Zusammenfassung**

Befestigungselement (10), z. B. Bolzen, und Fügeverfahren eines Befestigungselements mit den Schritten:
- Bereitstellen eines Befestigungselements (10) mit:
∘ einem schaftförmigen Ankerabschnitt (18),
∘ einem quer zum Ankerabschnitt (18) verlaufenden Flanschabschnitt (16), wobei der Flanschabschnitt (16) mindestens teilweise einen Auftragungsabschnitt (28) ausbildet, und
∘ einem Fügematerial (14), wobei das Fügematerial (14) auf den Auftragungsabschnitt vorappliziert ist,

- Bereitstellen eines Werkstücks (36), wobei das Werkstück (36) eine Trägerfläche (34) aufweist,
- Positionieren des Befestigungselements (10) auf der Trägerfläche (34) des Werkstücks,
- Fügen des Befestigungselements (10) auf dem Werkstück (36),
wobei ein Ultraschallgenerator (38) bereitgestellt wird und, wobei das Fügen des Befestigungselements (10) auf dem Werkstück (10) durch Ultraschall durchgeführt wird.

## Beschreibung

### Gebiet der Erfindung

Die vorliegende Erfindung betrifft ein Fügeverfahren eines Befestigungselements mit vorappliziertem Fügematerial, und ein solches Befestigungselement.

### Hintergrund der Erfindung

Auf dem Gebiet der Technik des Fügens von Befestigungselementen auf Werkstücke ist es bspw. bekannt, metallische Bolzen auf metallische Werkstücke zu schweißen. Dieses als "Bolzenschweißen" bekannte Verfahren wird insbesondere in der Automobilindustrie eingesetzt, um Bolzen auf Karosseriebleche zu schweißen, wobei an den Bolzen anschließend Befestigungsclips aus Kunststoff befestigt werden, an denen Kabel, Leitungen etc. festgelegt werden.

Aufgrund der Tatsache, dass beispielsweise im Karosseriebau von Kraftfahrzeugen vermehrt weniger gut schweißbare bzw. nichtmetallische Verbundmaterialien eingesetzt werden, wie Kunststoffe, Faserverbundbauteile, etc., hat die Klebetechnik sich als Fügeverfahren insbesondere im Karosseriebau etabliert. Anstatt die Bolzen auf Werkstücke zu schweißen, werden diese aufgeklebt.

Das Dokument DE102014118973 offenbart ein Befestigungselement mit einer Fügefläche, die einen Auftragungsbereich aufweist. Ein Fügematerial (bzw. ein Klebstoff) überdeckt zumindest teilweise den Auftragungsbereich. Der Klebstoff wird in der Regel erwärmt aufgetragen und dann wieder erkaltet. Das so hergestellte Befestigungselement ist dann mit dem Klebstoff transportierbar, bspw. von einem Ort der Herstellung zu einem Ort, an dem das Befestigungselement auf die Trägerfläche des Werkstücks zu kleben ist.

Aus dem Dokument WO98/12016 ist ein mit vorappliziertem Klebstoff versehenes Befestigungselement, das über einem Induktions-Feld zügig erwärmt wird, bekannt. Das Befestigungselement wird in einer Fügeposition auf eine Trägerfläche gehalten. Der Auftragungsbereich mit dem Klebstoff ist in Kontakt mit der Trägerfläche. Das Induktionsfeld erwärmt den Bolzen und dieser erwärmt über Wärmeleitung den Klebstoff, der verflüssigt wird. Der Klebstoff wird durch diese Wärmeeinbringung in seiner Vernetzungsreaktion beschleunigt. Die Induktion als Erwärmungsprinzip erlaubt eine schnelle Befestigung des Befestigungselements auf der Trägerfläche. Dieses Verfahren ist besonders für Trägerflächen aus Stahl und mit einer ausreichenden Blechstärke geeignet.

Heutzutage werden, besonders in der Automobilindustrie, andere Materialen, insbesondere nicht ferromagnetische Stoffe wie Aluminium, oder kohlenstofffaserverstärkter Kunststoff benutzt. Mit solchen Materialen kann das Fügeverfahren mit Induktion weniger effektiv sein. Durch den induktiven Erwärmungsprozess erwärmt sich die Induktionsschleife. Die Wärme muss abtransportiert werden, was beispielsweise durch Wasserkühlung erfolgt. Die Wasserkühlung wird durch zusätzliche Vorrichtungen gemacht, was zu einem höheren Raumbedarf führt. Des Weiteren sind Induktionsenergiequellen besonders teuer.

Andere Verfahren, wie beispielsweise Wärmeableitung mittels Wärmerohren, könnten genutzt werden. Solche Verfahren resultieren jedoch in einer hohen Komplexität der Konstruktion. Des Weiteren werden durch solche Verfahren große Bauabmessungen erforderlich.

Der vorliegenden Erfindung liegt daher die Aufgabe zugrunde, ein verbessertes Fügeverfahren anzugeben, das vorzugsweise eine einfache Konstruktion erlaubt, mit einer kompakten Herstellung und das gute Fügeergebnisse erlaubt. Ferner liegt die Aufgabe der vorliegenden Erfindung zugrunde, ein Fügeverfahren zu erzeugen, das eine Flexibilität bei den Materialen des geklebten Werkstücks erlaubt.

Der vorliegenden Erfindung liegt weiter die Aufgabe zugrunde, ein verbessertes Befestigungselement anzugeben, das eine bessere und einfache Lagerung erlaubt, und den Transport erleichtert.

### Zusammenfassung der Erfindung

Die oben genannte Aufgabe wird gelöst durch ein Fügeverfahren mit den Schritten:
- Bereitstellen eines Befestigungselements mit:
   ∘ einem schaftförmigen Ankerabschnitt, der sich zwischen einer ersten und einer zweiten Endportion entlang einer Ankerachse erstreckt, und
   ∘ einem quer dazu verlaufenden Flanschabschnitt, wobei der Flanschabschnitt an der ersten Endportion des Ankerabschnitts ausgebildet ist, wobei der Flanschabschnitt mindestens teilweise einen Auftragungsabschnitt ausbildet,
   o einem Fügematerial, wobei das Fügematerial auf den Auftragungsabschnitt vorappliziert ist, wobei das Fügematerial in einem festen Zustand auf dem Auftragungsabschnitt liegt,
- Bereitstellen eines Werkstücks, wobei das Werkstück eine Trägerfläche aufweist,
- Positionieren des Befestigungselements auf der Trägerfläche des Werkstücks,
- Fügen des Befestigungselements auf dem Werkstück,
dadurch gekennzeichnet, dass ein Ultraschallgenerator bereitgestellt wird und dass das Fügen des Befestigungselements auf dem Werkstück durch Ultraschall durchgeführt wird.

Der Ultraschallgenerator hat eine hohe Zuverlässigkeit, Flexibilität und eine kompakte Bauform. Ultraschallgeneratoren sind auch besonders leicht im Vergleich zu Induktionsquellen. Werkstücke mit dünnen Metallblechen können geklebt werden, aber auch Werkstücke aus Materialen wie zum Beispiel Kunststoff, lackiertes Aluminium, CFK, Thermoplasten, Duroplasten, Keramiken, Glas ...usw. Ultraschall erlaubt ferner eine gleichmäßige Mischung des vorapplizierten Fügematerials. Ferner wird anhand Erwärmung durch Ultraschall die Größe der Anlage reduziert im Vergleich zu Erwärmung durch Induktion. Beispielsweise könnte die Größe der Anlage um voraussichtlich die Hälfte oder mehr reduziert werden.

Gemäß einer weiteren bevorzugten Ausführungsform erwärmt der Ultraschallgenerator das Fügematerial bis zu einem geschmolzenen (viskösen oder flüssigen) Zustand, um das Fügen des Befestigungselements auf dem Werkstück zu ermöglichen. Der geschmolzene Zustand erlaubt eine bessere Adhäsion zwischen Befestigungselement und Werkstück. Das Fügematerial wird durch den Ultraschallgenerator über den Bolzen erwärmt.

In einer bevorzugten Ausführungsform weist das Fügematerial eine Klebstoffmatrix auf. Die Trägerfläche weist Kontaminationen auf. Die Klebstoffmatrix absorbiert die Kontaminationen. Als Kontaminationen werden beispielsweise Ölflecken, etc. bezeichnet. Insbesondere ist keine Oberflächenreinigung des Werkstücks vor dem Fügeverfahren nötig.

In einer weiteren bevorzugten Ausführungsform werden die Kontaminationen während des Fügens des Befestigungselements auf dem Werkstück absorbiert. Kein zusätzlicher Schritt in dem Verfahren ist nötig.

In einer besonders bevorzugten Ausführungsform weist das Fügematerial vor dem Fügen flüchtige Bestandteile auf. Die flüchtigen Bestandteile werden während dem Fügen durch Ultraschall vermindert.

In einer besonders bevorzugten Ausführungsform ist der Ultraschallgenerator mit einer Sonotrode verbunden. Das Befestigungselement wird während dem Fügen in der Sonotrode mechanisch gehalten.

In einer besonders bevorzugten Ausführungsform ist das Fügematerial einen Klebstoff. Das Fügematerial ist beispielsweiselinsenförmig angeordnet. Das Fügematerial weist einen Klebstoffhärter, und ein Klebstoffharz auf. Der Klebstoffhärter und das Klebstoffharz werden durch Ultraschall gleichmäßig durchmischt.

In einer besonders bevorzugten Ausführungsform weist das Fügematerial eine Klebstofftrennschicht. Die Klebstofftrennschicht ist zwischen dem Klebstoffhärter und dem Klebstoffharz angeordnet.

Ferner wird die obige Aufgabe gelöst durch ein Befestigungselement, das mit einem Werkstück fügbar ist, insbesondere anhand des oben beschriebenen Fügeverfahrens. Das Befestigungselement weist auf:
- einen schaftförmigen Ankerabschnitt, der sich zwischen einer ersten und einer zweiten Endportion entlang einer Ankerachse erstreckt,
- einen quer dazu verlaufenden Flanschabschnitt, wobei der Flanschabschnitt an der ersten Endportion des Ankerabschnitts ausgebildet ist, wobei der Flanschabschnitt mindestens teilweise einen Auftragungsabschnitt ausbildet, und
- ein Fügematerial, wobei das Fügematerial auf den Auftragungsabschnitt vorappliziert ist, wobei das Fügematerial in einem festen Zustand auf dem Auftragungsabschnitt liegt,
wobei das Fügematerial einen Klebstoffhärter und ein Klebstoffharz enthält, die durch Ultraschall von einem Ultraschallgenerator mischbar und/oder schmelzbar sind.

Das Fügematerial eines solchen Befestigungselements kann mehrere Monate stabil sein, und die Befestigungselemente können mehrere Monate gelagert werden und sind einfach transportierbar, ohne Kühlbox oder andere Abkühlungselemente. Der Ultraschall erlaubt eine gleichmäßige Mischung des Klebstoffhärters und Klebstoffharzes.

In einer besonders bevorzugten Ausführungsform ist das Fügematerial ein linsenförmiger Klebstofftropfen. Klebstoffhärter und Klebstoffharz sind beispielsweise durch eine Klebstofftrennschicht getrennt.

In einer besonders bevorzugten Ausführungsform sind Klebstoffhärter, Klebstofftrennschicht und Klebstoffharz konzentrisch zueinander angeordnet. Die konzentrische Anordnung erlaubt eine bessere Mischung des Klebstoffhärters und Klebstoffharzes.

In einer besonders bevorzugten Ausführungsform ist der Klebstoffhärter in der Mitte des Klebstofftropfens angeordnet. Das Klebstoffharz ist außen angeordnet. Das Klebstoffharz ist beispielsweise fest. Der Klebstoffhärter ist beispielsweise pastös.

Ferner kann die vorliegende Erfindung ein Befestigungselement betreffen, das aufweist:
- einen schaftförmigen Ankerabschnitt, der sich zwischen einer ersten und einer zweiten Endportion entlang einer Ankerachse erstreckt, und
- einen quer dazu verlaufenden Flanschabschnitt, wobei der Flanschabschnitt an der ersten Endportion des Ankerabschnitts ausgebildet ist, wobei der Flanschabschnitt mindestens teilweise einen Auftragungsabschnitt ausbildet,
- ein Fügematerial, wobei das Fügematerial auf den Auftragungsabschnitt vorappliziert ist, wobei das Fügematerial in einem festen Zustand auf dem Auftragungsabschnitt liegt,
wobei das Fügematerial einen Klebstoffhärter und ein Klebstoffharz enthält, die durch Erwärmung des Fügematerials mischbar sind.

Die Erwärmung des Fügematerials kann anhand verschiedener Erwärmungsmethoden, wie z.B. Ultraschall, Induktion, usw. erfolgen. Das Fügematerial eines solchen Befestigungselements kann mehrere Monate stabil sein, und die Befestigungselemente können mehrere Monate gelagert werden und sind einfach transportierbar, ohne Kühlbox oder andere Abkühlungselemente.

In einer besonders bevorzugten Ausführungsform sind Klebstoffhärter und Klebstoffharz durch eine Klebstofftrennschicht getrennt.

In einer besonders bevorzugten Ausführungsform sind Klebstoffhärter, Klebstofftrennschicht und Klebstoffharz konzentrisch zueinander angeordnet. Die konzentrische Anordnung erlaubt eine bessere Mischung des Klebstoffhärters und Klebstoffharzes.

In einer besonders bevorzugten Ausführungsform ist der Klebstoffhärter in der Mitte des Fügematerials angeordnet. Das Klebstoffharz ist außen angeordnet. Das Klebstoffharz ist beispielsweise fest. Der Klebstoffhärter ist beispielsweise pastös.

In einer besonders bevorzugten Ausführungsform weist der Auftragungsabschnitt eine Ringnut auf, und das Fügematerial (bzw. das Klebstoffharz) erstreckt sich in der Ringnut.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine schematische Querschnittansicht eines erfindungsgemäßen Befestigungselements;
Fig. 2 eine schematische Ansicht des Befestigungselements in einer Aufnahme einer Sonotrode, die mit einem Ultraschallgenerator verbunden ist;
Fig. 3A eine vergrößerte Detailansicht eines Auftragungsbereichs einer Fügefläche des Befestigungselements gemäß einer Ausführungsform der Erfindung mit einer Klebstoffmatrix nach Erwärmung durch Ultraschall;
Fig. 3B eine vergrößerte Detailansicht eines Auftragungsbereichs einer Fügefläche eines Befestigungselements mit einer Klebstoffmatrix nach Erwärmung ohne Ultraschall;
Fig. 4A eine Ansicht eines Befestigungselements mit einem Fügematerial gemäß einer Ausführungsform angeordnet;
Fig. 4B eine Ansicht eines Befestigungselements mit einem Fügematerial gemäß einer anderen Ausführungsform angeordnet.

### Detaillierte Beschreibung bevorzugter Ausführungsformen vorliegender Erfindung

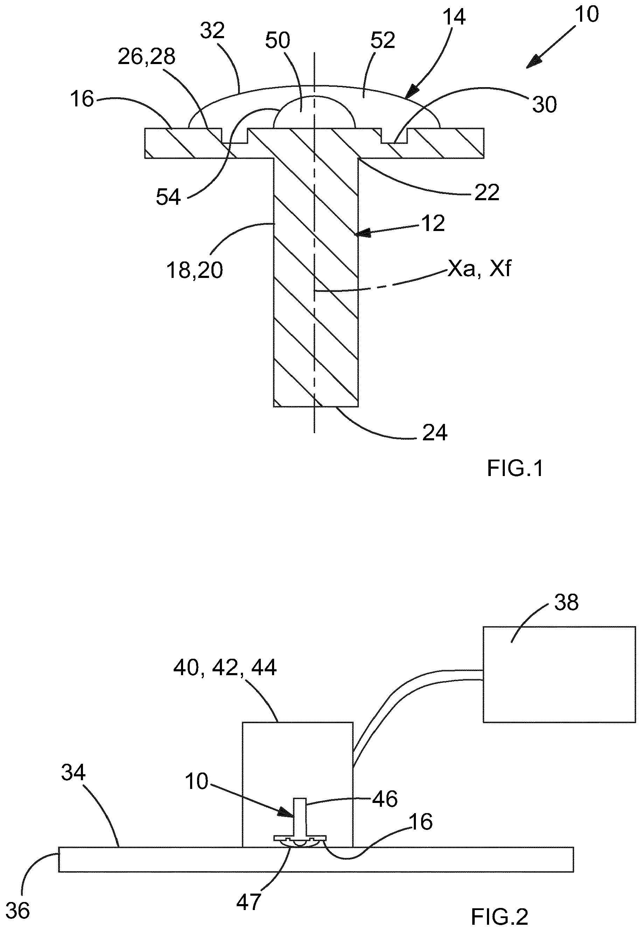

Fig. 1 stellt eine Ausführungsform eines Befestigungselements 10 schematisch im Längsschnitt dar. Das Befestigungselement weist ein Fügebauteil 12 und einen auf das Fügebauteil 12 vorappliziertes Fügematerial 14 auf.

Das Fügebauteil 12 weist einen Flanschabschnitt 16 und einen schaftförmigen Ankerabschnitt 18 auf. Das Fügebauteil 12 ist einstückig.

In einer anderen Ausführungsform kann das Fügebauteil 12 zweiteilig sein. In diesem Fall sind beispielsweise der Flanschabschnitt und der schaftförmige Ankerabschnitt zwei verschiedene Teile, die zusammen verbunden werden.

Der Ankerabschnitt 18 weist einen Grundkörper 20, eine erste und eine zweite Endportion 22, 24 auf. Der Grundkörper 20 erstreckt sich entlang einer Ankerachse Xa zwischen der ersten Endportion 22 und der zweiten Endportion 24. Der Grundkörper 20 des Ankerabschnitts 18 kann jeweils die gewünschte Schaftform annehmen. Wie in Fig. 1 dargestellt, kann der Grundkörper 20 einen kreisförmigen Querschnitt haben, im Wesentlichen konstant über seine Länge. In anderen Ausführungsformen könnte der Ankerabschnitt auch einen rechteckigen, dreieckigen, ... Querschnitt haben. Ebenfalls in anderen Ausführungsformen könnte der Grundkörper nicht konstant über seine Länge sein.

Die zweite Endportion 24 des Ankerabschnitts 18 ist vorzugsweise rund, aber andere Formen von Endportionen könnten vorgesehen sein. Zum Beispiel kann die zweite Endportion mit geschnittener Kante vorgesehen sein.

Der Ankerabschnitt 18 ist vorzugsweise aus Stahl. Andere Metalle wie zum Beispiel Aluminium oder andere Materialien können ebenfalls benutzt werden.

Der Flanschabschnitt 16 erstreckt sich von der ersten Endportion 22. Der Flanschabschnitt 16 ist beispielweise kreisförmig und konzentrisch zu einer Flanschachse Xf ausgerichtet.

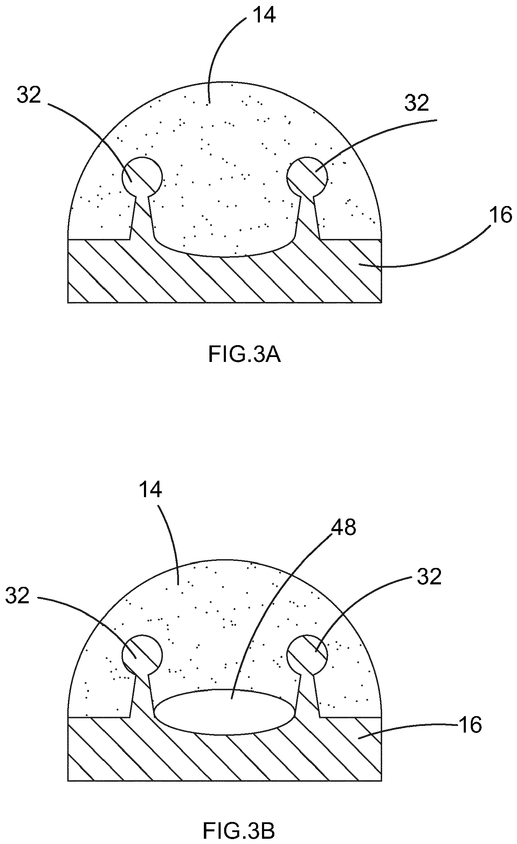

Das Fügebauteil 12 weist eine Fügefläche 26 auf. Diese Fügefläche 26 ist vorzugsweise aus einem metallischen Werkstoff. Die Fügefläche 26 ist beispielsweise auf dem Flanschabschnitt 16 vorgesehen. Die Fügefläche 26 weist einen Auftragungsabschnitt 28 auf. Der Auftragungsabschnitt 28 ist geeignet, um ein Fügematerial zu empfangen. Eine retentive Oberflächenstruktur mit Materialhinterschneidungen 32 bildenden Erhebungen ist zum Beispiel auf dem Auftragungsabschnitt 28 ausgebildet (siehe Fig. 3A und Fig. 3B). Die Herstellung von Materialhinterschneidungen 32 auf der Fügefläche 26 ist vorzugsweise in DE102014118973 beschrieben.

Eine Ringnut 30 kann auch zusätzlich oder alternativ in dem Flanschabschnitt 16 (bzw. in dem Auftragungsabschnitt 28 des Fügebauteils 12) vorgesehen sein (siehe Fig. 1). Die Ringnut weist beispielsweise eine radial innen liegende Innenwand und eine radial außen liegende Außenwand auf. Die Ringnut kann konzentrisch zu der Flanschachse Xf ausgerichtet sein. Die Höhe bzw. Tiefe der Ringnut ist vorzugsweise größer als das 0,1-fache der Höhe des Flanschabschnitts 16 und kleiner als das 0,5-fache der Höhe des Flanschabschnitts 16.

Der Auftragungsabschnitt 28 (beispielsweise mit Materialhinterschneidungen 32 und/oder Ringnut 30) wird mit einem Fügematerial 14, überdeckt. Das Fügematerial 14 füllt dabei die Ringnut 30 vorzugsweise vollständig aus.

Das Fügematerial 14 ist beispielsweise ein Klebstoff und/oder ein Klebstofftropfen, der auf den Auftragungsabschnitt 28 (bzw. auf die Fügefläche) aufgebracht wird. Das Fügematerial 14 kann auch verschiedene allgemeine Forme aufweisen, und nicht nur eine Tropfenform. Das Fügematerial 14 wird vorzugsweise in erwärmtem Zustand auf die Fügefläche aufgebracht. Das Fügematerial 14 erkaltet dann wieder. Bei der Verfestigung aufgrund der Abkühlung hat sich das Fügematerial (bzw. der Klebstoff) in radialer Richtung zusammengezogen, derart, dass das Fügematerial 14 die Innenwand der Ringnut 30 umklammert und das Fügematerial 14 folglich in axialer Richtung kraftschlüssig hält. Durch die retentive Oberflächenstruktur im Auftragungsabschnitt 28 mit den Materialhinterschneidungen 32 bildenden Erhebungen ist während der Abkühlung des Fügematerials 14 (bzw. Klebstofftropfens) eine Art Verklammerung zwischen Fügematerial 14 und Auftragungsabschnitt 28 entstanden.

Das Befestigungselement 10 kann dann gelagert werden und ist transportierbar, bspw. von einem Ort der Herstellung zu einem Ort, an dem das Fügebauteil auf das Werkstück zu kleben ist.

Das so hergestellte Befestigungselement 10 wird beispielsweise auf Trägerflächen 34 von Werkstücken 36 aufgeklebt (siehe Fig. 2). Insbesondere wird das Befestigungselement 10 auf einer Trägerfläche 34 eines Werkstücks 36 positioniert. Das Fügematerial 14 ist gegen die Trägerfläche 34 angelegt.

Das Fügematerial 14 wird durch Ultraschall erwärmt, um das Werkstück 34 mit dem Befestigungselement 10 zu verbinden.

Vor der Erwärmung besteht das Fügematerial 14 vorzugsweise aus einem chemisch unvernetzten oder nicht vollständig chemisch vernetzten Klebstoff. Das Fügematerial 14 wird durch Wärmebehandlung verflüssig und vollständig chemisch vernetzt. Die vollständige Haftfestigkeit des Fügematerials 14 durch spezifische Adhäsion wird während des Fügeverfahrens zum Werkstück 34 durch vollständige chemische Vernetzung des Klebstoffs aufgebaut. Das erwärmte Fügematerial 14 weist eine Klebstoffmatrix auf.

Ein Ultraschallgenerator 38 (siehe Fig. 2) erzeugt ein elektrisches Wechselsignal mit einer gewünschten Frequenz. Das elektrische Wechselsignal wird durch einen Ultraschallkonverter 40 in mechanische Schwingungen umgesetzt. Die Schwingungen können translatorisch oder rotatorisch sein. Piezoelemente können beispielsweise hierzu eingesetzt werden. Ein Booster 42 kann die mechanischen Schwingungen verstärken, um eine gewünschte Schwingungsamplitude zu erreichen. Die vollständige chemische Vernetzung des Fügematerials (bzw. des Klebstoffs) wird durch Ultraschall aufgebaut.

Eine Sonotrode 44 (siehe Fig. 2) ist vorgesehen. Die Sonotrode 44 stellt die Verbindung vom Ultraschallgenerator 38 zum Werkstück 36 her. Die Sonotrode 44 überträgt die Schwingungen auf die Fügefläche 26 und/oder Fügematerial14 und/oder Trägerfläche 34.

Das Befestigungselement 10 wird beispielsweise in der Sonotrode 44 aufgenommen. Insbesondere weist die Sonotrode 44 eine Aufnahme 46, um das Befestigungselement 10 aufzunehmen. Das Befestigungselement 10 ist in der Sonotrode 44 so auszulegen, dass eine erforderliche Frequenz und Amplitude am Flanschabschnitt 16 erzeugt werden. Die erforderliche Frequenz und Amplitude am Flanschabschnitt 16 sind beispielsweise vorher programmierbar und können von den Abmessungen und/oder den Materialen des Befestigungselements 10 und/oder des Fügematerials 14 abhängen.

Zur Schwingungsübertragung ist ein kraftschlüssiger Kontakt zwischen Sonotrode 44 und Flanschabschnitt 16 erforderlich. Dieser kann durch Aufdrücken des Befestigungselements 10 gegen das Werkstück 36 erzeugt werden. Um die Anpresskraft (insbesondere bei federnden und dünnwandigen Werkstücken 36) zu reduzieren, ist beispielsweise das Befestigungselement 10 in der Sonotrode44 mechanisch zu halten. Der Ankerabschnitt 18 des Befestigungselements 10 wird in der Sonotrode 44 beispielsweise gehalten. Die Halterung kann durch eine Zange oder andere Halterungsmittel erfolgen.

In einer Ausführungsform kann das Fügematerial 14 in flüssiger Phase (vor der Vernetzung des Fügematerials durch Ultraschall) vorliegen. In diesem Fall ist fast kein Anpressdruck zum Erwärmen des Fügematerials 14 erforderlich. Die flüssige Phase des Fügematerials 14 kann durch eine Vorwärmung des Werkstücks 36 und/oder des Befestigungselements 10, zum Beispiel über die Schmelztemperatur des vorapplizierten Fügematerials 14 erfolgen. Durch Aufsetzen des Fügematerials 14 auf ein über den Schmelzpunkt des Fügematerials 14 erwärmtes Werkstück 36 wird das Fügematerial14 im Bereich der Grenzfläche (i.e. die Fläche, die direkt an der Trägerfläche ist) verflüssigt. Die Werkstückerwärmung kann beispielsweise über einen Infrarot-Strahler erfolgen, aber andere Erwärmungsmethoden können auch vorgesehen sein.

In einer anderen Ausführungsform kann beispielsweise eine Heizvorrichtung im Bereich der Befestigungselementaufnahme eingesetzt werden, um das Befestigungselement 10 zu erwärmen. Hierzu können beispielsweise ein Heizkörper, wie zum Beispiel eine Heizwendel, im Bereich des Flanschabschnitts 16 und/oder ein auf das Befestigungselement 10 gerichteter Infrarotstrahler eingesetzt werden. Ein Pyrometer kann vorgesehen sein, um die Temperatur zu regeln.

In einer anderen Ausführungsform könnte auch die Sonotrode 44 selbst erwärmt werden. Die Sonotrode 44 kann über Wärmeleitung Wärme an das Befestigungselement 10 abgeben und dieses so aufheizen.

In einer weiteren Ausführungsform kann die Vorwärmung in einer Übergabestation durchgeführt werden. Das Befestigungselement 10 wird über die Übergabestation mit dem Ankerabschnitt 18 voran in die Aufnahme 46 der Sonotrode 44 gesteckt. Die Vorwärmung des Fügematerials 14 könnte beispielsweise in einen Ladestift der Übergabestation integriert werden. Die Vorwärmung würde gezielt und unmittelbar vor dem Kleben erfolgen. In diesem Fall können Elemente vorgesehen sein, die überprüfen, dass der Ladestift nicht auf den dann teilweise verflüssigtes Fügematerial drückt, um ein Anhaften und Verschmutzen der Anlage zu vermeiden. Schutzelemente können auch vorgesehen sein, um ein Verschmutzen der Anlage zu vermeiden.

Das Fügematerial 14 ist vorzugsweise auf dem Fügebauteil (insbesondere auf dem Auftragungsabschnitt) so geformt, dass Kontaminationen 47 auf der Trägerfläche des Werkstücks absorbiert werden können. Zum Beispiel können adhäsionshemmende Öle durch die Vernetzungstemperaturen in der Klebstoffmatrix mobilisiert werden. Die Vernetzungstemperatur (anders gesagt die Temperatur der Erwärmung) ist zum Beispiel ca. 170 °C. Während der Vernetzungsphase des Fügematerials 14 können die Kontaminationen (zum Beispiel adhäsionshemmenden Öle) in der Klebstoffmatrix absorbiert werden. Die Vernetzungsphase kann beispielsweise mehrere Minuten dauern, um die Absorbierung der Kontaminationen zu erlauben. Bei Einleitung von Leistungsultraschall in das Fügematerialagiert dieser als "Reinigungsmedium". Die Kontaminationen (adhäsionshemmenden Öle, ...) werden in der Klebstoffmatrix absorbiert, wo sie keinen signifikanten nachteiligen Einfluss (z.B. auf die Adhäsion des Befestigungselements 10) haben. Die Erwärmung durch Ultraschall erlaubt eine ausreichende Zeit, um einen temperaturgetriebenen Diffusionsprozess durchzuführen. Dieser temperaturgetriebene Diffusionsprozess erlaubt die Absorbierung der Kontaminationen 47. Die "Reinigung" wird zeitgleich mit dem Fügen realisiert.

Das Fügematerial 14 kann beispielsweise flüchtige Bestandteile 48 enthalten. Die flüchtigen Bestandteile 48 können durch Ultraschall entfernt werden. Durch Ultraschall (bzw. durch Leistungsultraschall) kann ein Ausgasen unterstützt werden, damit keine Blasen 48 (bzw. flüchtige Bestandteile 48) in der Klebstoffmatrix zurückbleiben. Die bei Nutzung der retentiven Laserstrukturierung entstehenden Gasblasen werden ebenfalls entfernt. Fig. 3A und Fig. 3B zeigen beispielsweise den Unterschied zwischen einem mit Ultraschall erwärmten und einem ohne Ultraschall (zum Beispiel mit Induktion) erwärmte Fügematerial14. Durch Ultraschallerwärmung wird eine höhere Lagerstabilität erreicht. Ohne Ultraschall können sich Gaseinschlüsse 48 (bzw. Blasen oder flüchtige Bestandteile), zum Beispiel in Hinterschneidungen 32, bilden und bleiben, auch nach der Erkaltung des Fügematerials 14. Diese Gaseinschlüsse 48 können direkte Einflüsse auf die Adhäsion des Befestigungselements 10 haben.

Ultraschall erlaubt auch das Desagglomerieren im Polymer enthaltener Füllstoffe. Des Weiteren erlaubt Ultraschall ein homogenes Dispergieren unterschiedlicher Fügematerialbestandteile (bzw. Klebstoffbestandteile). Beides (das Desagglomerieren im Polymer enthaltener Füllstoffe und das homogene Dispergieren unterschiedlicher Klebstoffbestandteile) könnte zur Verlängerung der Klebstoffhaltbarkeit genutzt werden. So könnten durch Agglomerieren blockierte Härtermoleküle freigesetzt, räumlich getrennt applizierte Harz- und Härterkomponenten während des Klebprozesses gemischt und die Freisetzung verkapselter Härtermoleküle beschleunigt werden.

Durch die vernachlässigbare Erwärmung des Befestigungselements 10 während der Ultraschall-Härtung ist eine Verbesserung der Abzeichnungsfreiheit zu erwarten. Zudem sind geringere Eigenspannungen in der Klebstoffmatrix zu erwarten, die zu einer Limitierung der Klebfestigkeit führen können.

Das Fügematerial (bzw. der Klebstofftropfen) enthält beispielsweise einen Epoxidharz-Klebstoff. Zum Beispiel weist das Fügematerial einen Klebstoffhärter 50 und ein Klebstoffharz 52 auf. Klebstoffhärter 50 und Klebstoffharz 52 können beispielsweise im Verhältnis 2:1 in dem Fügematerial 14 vorgesehen sein. In andere Ausführungsformen können andere Mischungsverhältnisse vorgesehen sein.

In einer Ausführungsform ist mit Verfügbarkeit einer direkten Durchmischung des Fügematerial s 14 während des Fügeverfahrens, besonders durch Einleitung von Leistungsultraschall unter Nutzung des entstehenden Durchmischungseffektes, ein physisch getrennter Auftrag von Klebstoffharz 52 und Klebstoffhärter 50 oder ein Beschleuniger auf den Flanschabschnitt 16 möglich. Eine chemische Vernetzungsreaktion des Fügematerials 14 (mit getrennten Klebstoffhärter 50 und Klebstoffharz 52) wird vor dem Klebeprozess (Fügeverfahren) vermieden. Das Fügematerial 14 mit getrenntem Klebstoffhärter 50 und Klebstoffharz 52 kann bei höheren Temperaturen mehrere Monate lang stabil bleiben.

Wie in Fig. 1 dargestellt weist das Fügematerial einen Klebstoffhärter 50 oder einen Beschleuniger und ein Klebstoffharz 52 auf. Der Klebstoffhärter 50 ist beispielsweise in einer pastösen, viskösen, oder flüssigen Form. Das Klebstoffharz 52 ist beispielsweise fest. Eine Klebstofftrennschicht 54 kann zwischen dem Klebstoffharz 52 und dem Klebstoffhärter 54 vorgesehen sein.

Zunächst wird dem gewünschten Mischungsverhältnis entsprechend ein Tropfen Klebstoffhärter 50 auf dem Flanschabschnitt 16 appliziert. Der Tropfen Klebstoffhärter 50 ist beispielsweise zentrisch auf dem Flanschabschnitt 16 appliziert.

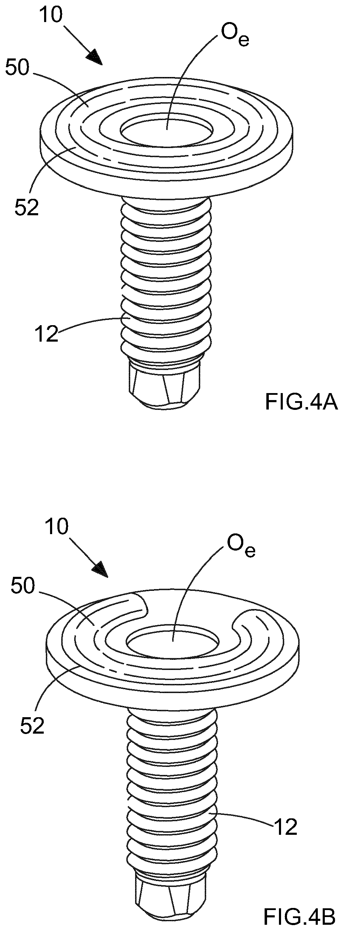

Wie in Fig. 4A und Fig. 4B dargestellt, kann das Fügematerial einen kreisförmigen Fügematerialstrang ausbilden. Der kreisförmige Fügematerialstrang kann um die Ankerachse zentriert sein, oder bezüglich der Ankerachse versetzt sein. Der kreisförmige Fügematerialstrang ist mit einer Innenwand, die eine zentrale Öffnung Oe begrenzt. Der kreisförmige Fügematerialstrang kann einen halbkreisförmigen Querschnitt haben. Beispielsweise ist der Klebstoffhärter 50 in Form eines kreisförmigen Strangs aufgebracht. Das Klebstoffharz 52 (beispielsweise mit der Trennschicht 54) wird dann auch in Form eines kreisförmigen Strangs aufgebracht, um den Klebstoffhärter 50 zu überdecken. Das Fügematerial kann einen durchgehenden kreisförmigen Strang ausbilden, wie in Fig. 4A dargestellt, oder eine einmal oder mehrmals unterbrochenen Strang ausbilden. In Fig. 4B bildet das Fügematerial einen Kreisbogen aus, mit zwei Ende, die entfernt voneinander sind. Beispielsweise eine Aufnahme ist in der zentralen Öffnung Oe vorgesehen.

Der Klebstoffhärter 50 kann im Verarbeitungszustand bei Erwärmung auf ca. 80 °C flüssig. Der Klebstoffhärter 50 wird beim Abkühlen beispielsweise zäh und pastös. Insbesondere wird der Klebstoffhärter 50 beim Abkühlen nicht fest.

Die Klebstofftrennschicht 54 kann auf den Klebstoffhärter 50 aufgetragen werden. Die Klebstofftrennschicht 54 kann auf den Klebstoffhärter 50 durch eine Beflammung mit Pyrosil® (i.e. eine Silikatschicht) aufgebracht werden. Eine Brennflamme wird vorzugsweise zügig über den Klebstoffhärter 50 geführt. Ein nur wenig Nanometer dicke aber dichte Silikatschicht scheidet sich beispielsweise auf dem Klebstoffhärter 50 ab und ermöglicht eine physische Trennung zum anschließend aufgetragenen Klebstoffharz 52. Da eine äußerst kurze Exposition mit der Beschichtungsflamme genügt, ist nur ein mäßiger Temperaturanstieg zu erwarten.

In einer anderen Ausführungsform könnte mittels Plasmapolymerisation eine dünne Polymerschicht auf dem Klebstoffhärter 50 abgeschieden werden. Dieses Verfahren ist ein dem Pyrosil-Beflammen sehr ähnliches Verfahren mit noch geringerer thermischer Belastung.

In anderen Ausführungsformen ist jedes Verfahren zur Abscheidung einer Dünnschicht von Polymer, Metall oder anorganischer Stoffe geeignet, sofern die thermische Belastung gering gehalten wird. Beispielsweise kann der Aufbau einer Klebstofftrennschicht 54 auch durch Pulverbestäubung eines pulverförmigen Feststoffes erfolgen.

Klebstoffhärter 50, Klebstofftrennschicht 54 und Klebstoffharz 52 sind beispielsweise konzentrisch zueinander angeordnet. In anderen Ausführungsformen sind Klebstoffhärter 50, Klebstofftrennschicht 54 und Klebstoffharz 52 nicht konzentrisch angeordnet. Im Wesentlichen überdeckt das Klebstoffharz 52 den Klebstoffhärter 50. Der Klebstoffhärter 50 ist in der Mitte des Klebstofftropfens 14. Das Klebstoffharz 52 ist nach außen angeordnet. Das Klebstoffharz 52 erstreckt sich beispielsweise, wie in Fig. 1 vorgestellt, in der Ringnut 30. In anderen Ausführungsformen kann der Klebstoffhärter 50 sich auch in der Ringnut 30 erstecken. In einer weiteren Ausführungsform können Klebstoffhärter 50 und Klebstoffharz 52 sich auch in der Ringnut 30 erstecken.

Klebstoffhärter 50, Klebstofftrennschicht 54 und Klebstoffharz 52 werden dann, wie oben beschrieben, durch die Erwärmung des Fügematerials 14 gemischt. Zuerst wird die Klebstofftrennschicht 54 sich durch die Erwärmung des Fügematerials 14 lösen. Ferner werden Klebstoffhärter 50 und Klebstoffharz 52 in Kontakt sein und sich mischen.

Ultraschall erlaubt eine gleichmäßige Mischung des Klebstoffhärters 50 und Klebstoffharzes 52. Insbesondere wird die Diffusion des Klebstoffhärters 50 in dem Klebstoffharz 52 (zum Beispiel eine Epoxidharzmatrix) durch Ultraschall unterstützt.

## Patentansprüche

1. Fügeverfahren mit den Schritten:
- Bereitstellen eines Befestigungselements (10) mit:
∘ einem schaftförmigen Ankerabschnitt (18), der sich zwischen einer ersten und einer zweiten Endportion (22, 24) entlang einer Ankerachse erstreckt,
∘ einem quer zum Ankerabschnitt (18) verlaufenden Flanschabschnitt (16), wobei der Flanschabschnitt (16) an der ersten Endportion (22) des Ankerabschnitts (18) ausgebildet ist, wobei der Flanschabschnitt (16) mindestens teilweise einen Auftragungsabschnitt (28) ausbildet, und
∘ einem Fügematerial (14), wobei das Fügematerial (14) auf den Auftragungsabschnitt vorappliziert ist, wobei das Fügematerial (14) in festem Zustand auf dem Auftragungsabschnitt (28) liegt,
- Bereitstellen eines Werkstücks (36), wobei das Werkstück (36) eine Trägerfläche (34) aufweist,
- Positionieren des Befestigungselements (10) auf der Trägerfläche (34) des Werkstücks,
- Fügen des Befestigungselements (10) auf dem Werkstück (36),
**dadurch gekennzeichnet, dass** ein Ultraschallgenerator (38) bereitgestellt wird und, dass das Fügen des Befestigungselements (10) auf dem Werkstück (10) durch Ultraschall durchgeführt wird.

2. Fügeverfahren nach Anspruch 1, wobei der Ultraschallgenerator (38) das Fügematerial (14) bis zu einem geschmolzenen Zustand erwärmt, um das Befestigungselement (10) auf dem Werkstück (36) zu fügen.

3. Fügeverfahren nach Anspruch 1 oder 2, wobei das Fügematerial (14) eine Klebstoffmatrix aufweist, wobei die Trägerfläche (34) Kontaminationen aufweist, und wobei die Klebstoffmatrix die Kontaminationen absorbiert.

4. Fügeverfahren nach Anspruch 3, wobei die Kontaminationen während des Fügens des Befestigungselements (10) auf dem Werkstück (36) absorbiert werden.

5. Fügeverfahren nach einem der Ansprüche 1-4, wobei das Fügematerial (14) vor dem Fügen flüchtige Bestandteile aufweist, und wobei die flüchtigen Bestandteile während dem Fügen durch Ultraschall vermindert werden.

6. Fügeverfahren nach einem der Ansprüche 1-5, wobei der Ultraschallgenerator (38) mit einer Sonotrode (44) verbunden ist, und wobei das Befestigungselement (10) während dem Fügen in der Sonotrode (44) mechanisch gehalten ist.

7. Fügeverfahren nach einem der Ansprüche 1-6, wobei das Fügematerial (14) einen Klebstoffhärter (50), eine Klebstofftrennschicht (54) und ein Klebstoffharz (52) enthält, und wobei der Klebstoffhärter (50) und das Klebstoffharz (52) durch Ultraschall gleichmäßig durchgemischt werden.

8. Befestigungselement (10), das mit einem Werkstück fügbar ist, insbesondere anhand des Fügeverfahrens nach einem der Ansprüche 1-6, mit:
- einem schaftförmigen Ankerabschnitt (18), der sich zwischen einer ersten und einer zweiten Endportion entlang einer Ankerachse (Xa) erstreckt, und
- einem quer dazu verlaufenden Flanschabschnitt (16), wobei der Flanschabschnitt (16) an der ersten Endportion des Ankerabschnitts (18) ausgebildet ist, wobei der Flanschabschnitt (16) mindestens teilweise einen Auftragungsabschnitt ausbildet,
- einem Fügematerial (14), wobei das Fügematerial (14) auf den Auftragungsabschnitt (28) vorappliziert ist, wobei das Fügematerial (14) in festem Zustand auf dem Auftragungsabschnitt (28) liegt,
wobei das Fügematerial (14) einen Klebstoffhärter (50) und ein Klebstoffharz (52) enthält, die durch Ultraschall von einem Ultraschallgenerator mischbar und/oder schmelzbar sind.

9. Befestigungselement nach Anspruch 8, wobei das Fügematerial (14) einen linsenförmigen Klebstofftropfen ist, und wobei Klebstoffhärter (50) und Klebstoffharz (52) durch eine Klebstofftrennschicht (54) getrennt sind.

10. Befestigungselement nach Anspruch 9, wobei Klebstoffhärter, Klebstofftrennschicht und Klebstoffharz konzentrisch zueinander ausgestaltet sind, wobei der Klebstoffhärter (50) in der Mitte des Klebstofftropfens (14) ist.
